# EUROPÄISCHE PATENTANMELDUNG

(11) **EP 1 641 299 A1**
(43) Veröffentlichungstag der Anmeldung: **29.03.2006**
(21) Anmeldenummer: 04022549.2
(22) Anmeldetag: 22.09.2004
(51) Int. Cl.: H04Q 7/38

(54) **Verfahren zur Unterstützung von Zufallszugriffen einer Teilnehmerstation in einem Funkkommunikationssystem**

(71) Anmelder: SIEMENS AKTIENGESELLSCHAFT, 80333 München (DE)
(72) Erfinder: Dillinger, Markus, 81737 München (DE); Freisinger, Michael, 1100 Wien (AT); Slanina, Peter, 3441 Judenau (AT); Luo, Jijun, 81677 München (DE)

(57) **Zusammenfassung**

Die Erfindung betrifft ein Verfahren zur Kommunikation in einem Funkkommunikationssystem, wobei das Funkkommunikationssystem eine erste Funkstation (BS1) an einem ersten Standort und eine zweite Funkstation (BS2) an einem zweiten von dem ersten verschiedenen Standort aufweist. Die erste Funkstation (BS1) empfängt eine Zufallszugriffsnachricht zur Anforderung von Funkressourcen von einer Teilnehmerstation (MS). Zuvor versendet die zweite Funkstation (BS2) eine Signalisierungsnachricht mit Informationen betreffend ein der Vorbereitung der Versendung der Zufallszugriffsnachricht dienendes Signal der ersten Funkstation (BS1). Weiterhin betrifft die Erfindung eine Funkstation und eine Teilnehmerstation zur Durchführung des Verfahrens.

## Beschreibung

Die Erfindung betrifft ein Verfahren zur Kommunikation in einem Funkkommunikationssystem, bei welchem eine Teilnehmerstation eine Zufallszugriffsnachricht zur Anforderung von Funkressourcen an eine Funkstation versendet.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen oder netzseitige Funkstationen wie Basisstationen, Repeater oder Funkzugangspunkte handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von beispielsweise einigen hundert Metern im Vergleich zu üblichen Mobilfunkzellen klein. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren. Bei Codebereichs-Vielfachzugriffsverfahren werden für die Kommunikation von Teilnehmerstationen teilnehmerspezifische Codes verwendet, so dass in Abwärtsrichtung die jeweilige Teilnehmerstation bzw. in Aufwärtsrichtung netzseitige Einrichtungen die Nachrichten an die bzw. von der Teilnehmerstation von den Nachrichten an bzw. von anderen Teilnehmerstationen unterscheiden können, indem eine Korrelation zwischen dem empfangenen Signal und dem jeweiligen Code durchgeführt wird.

Wünscht eine Teilnehmerstation die Zuweisung von Funkressourcen für die Versendung oder den Empfang von Nachrichten, so versendet sie eine Zufallszugriffsnachricht (englisch: RA, Random Access). Der hierfür zur verwendende Kanal sowie der Inhalt und Aufbau der RA-Nachricht hängt von der konkreten Ausgestaltung des Funkkommunikationssystems ab.

Der Erfindung liegt die Aufgabe zugrunde, ein effizientes Verfahren zur Kommunikation per Funk aufzuzeigen, bei welchem eine Teilnehmerstation eine Zufallszugriffsnachricht zur Anforderung von Funkressourcen versendet. Weiterhin sollen eine Funkstation und eine Teilnehmerstation zur Durchführung des Verfahrens, vorgestellt werden.

Diese Aufgabe wird durch ein Verfahren mit den Merkmalen des Anspruchs 1 und durch eine Funkstation sowie eine Teilnehmerstation mit Merkmalen von nebengeordneten Ansprüchen gelöst. Vorteilhafte Ausgestaltungen und Weiterbildungen sind Gegenstand von Unteransprüchen.

Das erfindungsgemäße Verfahren dient der Kommunikation in einem Funkkommunikationssystem, wobei das Funkkommunikationssystem eine erste Funkstation an einem ersten Standort und eine zweite Funkstation an einem zweiten Standort aufweist. Die beiden Standorte unterscheiden sich voneinander. Die erste Funkstation empfängt eine Zufallszugriffsnachricht zur Anforderung von Funkressourcen von einer Teilnehmerstation. Zuvor, d.h. bevor die Teilnehmerstation die Zufallszugriffsnachricht versendet, versendet die zweite Funkstation eine Signalisierungsnachricht mit Informationen betreffend ein der Vorbereitung der Versendung der Zufallszugriffsnachricht dienendes Signal der ersten Funkstation.

Bei der ersten und der zweiten Funkstation kann es sich insbesondere um Basisstationen eines zellularen Mobilfunkkommunikationssystems handeln. Die beiden Funkstationen können unterschiedlich eingesetzt werden, indem z.B. die erste Funkstation sowohl Nachrichten von Teilnehmerstationen empfängt als auch Nachrichten an Teilnehmerstationen versendet, während die zweite Funkstation ausschließlich Nachrichten versendet. Hierbei kann die zweite Funkstation einen anderen Funkfrequenzbereich verwenden als die erste Funkstation. Neben der ersten und der zweiten Funkstation können gegebenenfalls weitere Funkstationen vorhanden sein, welche auch das erfindungsgemäße Verfahren durchführen, und/oder weitere Funkstationen, welche an dem erfindungsgemäßen Verfahren nicht beteiligt sind.

Die Zufallszugriffsnachricht der Teilnehmerstation zeigt der ersten Funkstation an, dass die Teilnehmerstation Funkressourcen für die Versendung und/oder den Empfang von Nachrichten benötigt. Dies kann indirekt erfolgen, indem die Zufallszugriffsnachricht auf eine andere Nachricht mit einer Anforderung nach Funkressourcen hinweist.

Die zweite Funkstation versendet Informationen, welche ein Signal der ersten Funkstation betreffen. Hierbei können die Informationen z.B. den Inhalt des Signals vollständig oder teilweise enthalten, sich auf den Inhalt beziehen, diesen ergänzen oder erläutern, sie können Informationen über die Ausstrahlung des Signals umfassen, wie z.B. den zur Ausstrahlung des Signals verwendeten Kanal oder die zur Ausstrahlung verwendete Sendeleistung oder auch eine Codierung des Signals.

Das Signal der ersten Funkstation dient - zumindest unter anderem - der Vorbereitung der Versendung einer Zufallszugriffsnachricht durch eine Teilnehmerstation. Es ist möglich, dass die Teilnehmerstation neben dem Signal eines oder mehrere weitere Signale der ersten Funkstation zur Vorbereitung der Versendung einer Zufallszugriffsnachricht benötigt. Bei dem Signal kann es sich z.B. um ein Signal mit Informationen eines Broadcast-Kanals handeln, d.h. eines Kanals, welcher Organisations- bzw. Signalisierungsinformationen enthält, die für eine Mehrzahl an Teilnehmerstationen bestimmt sind. Das Signal kann z.B. Informationen über einen für Zufallszugriffsnachrichten verwendbaren Kanal, über die Sendeleistung für Zufallszugriffsnachrichten bzw. Informationen zur Bestimmung dieser Sendeleistung, und/oder über den Inhalt einer zu versendenden Zufallszugriffsnachricht enthalten. Weiterhin kann es sich bei dem Signal um ein Signal handeln, dessen Inhalt für das Auslesen eines weiteren Signals, wie z.B. eines oben beschriebenen Signals mit Informationen eines Broadcast-Kanals, nötig ist.

In Weiterbildung der Erfindung erfolgt auf den Empfang der Zufallszugriffsnachricht durch die erste Funkstation hin eine Versendung einer teilnehmerstationsspezifischen Nachricht durch die zweite Funkstation an die Teilnehmerstation. In diesem Fall erfolgt vor der Versendung der Zufallszugriffsnachricht keine Übertragung von teilnehmerstationsspezifischen Nachrichten durch die zweite Funkstation an die Teilnehmerstation, hierfür muss zuerst die Versendung der Zufallszugriffsnachricht an die erste Funkstation erfolgen. Zwischen der Versendung der Zufallszugriffsnachricht durch die Teilnehmerstation und der Übertragung der teilnehmerstationsspezifischen Nachricht durch die zweite Funkstation kann eine Kommunikation zwischen der Teilnehmerstation und der ersten Funkstation erfolgen, umfassend z.B. die Zuweisung von Funkressourcen der zweiten Funkstation für die Versendung der teilnehmerstationsspezifischen Nachricht.

Mit Vorzug betreffen die Informationen die Frequenz der Ausstrahlung des Signals. Dies kann z.B. auch realisiert werden durch die Angabe der Frequenz eines anderen Signals, welches auf der gleichen Frequenz wie das Signal ausgestrahlt wird, oder indirekt durch die Angabe einer anderen Frequenz, welche einen vorgegebenen Abstand zur Frequenz der Ausstrahlung des Signals aufweist.

In Ausgestaltung der Erfindung betreffen die Informationen Informationen, welche in dem Signal enthalten sind, wie z.B. Identifikationsinformationen der ersten Funkstation oder ihrer Funkzelle.

Einer anderen Ausgestaltung der Erfindung gemäß ermöglichen die Informationen das Auslesen des Inhaltes des Signals, so z.B. durch Angabe eines Codes, mit welchem das Signal codiert ist. Es ist möglich, dass neben den Informationen der Signalisierungsnachricht der zweiten Funkstation weitere Informationen nötig sind, um das Signal der ersten Funkstation auslesen zu können.

Vorteilhaft ist es, wenn die Informationen eine Sendeleistung der ersten Funkstation betreffen. Dies ist insbesondere vorteilhaft in Kombination mit einer Ausgestaltung der Erfindung, wonach das Signal der Teilnehmerstation ermöglicht, eine für die Ausstrahlung der Zufallszugriffsnachricht zu verwendende Leistung zu bestimmen. Hierbei kann eine offene Schleife zur Leistungsregelung verwendet werden, gemäß welcher die Teilnehmerstation die Empfangsleistung des Signals oder eines weiteren Signals der ersten Funkstation misst und das Signal die jeweilige Sendeleistung beinhaltet, so dass die Teilnehmerstation den Pfadverlust bestimmen kann.

Einer Weiterbildung der Erfindung gemäß untersagt die Signalisierungsnachricht der Teilnehmerstation die Versendung einer Zufallszugriffsnachricht an die zweite Funkstation und/oder die Verwendung von Empfangsleistungen von Signalen der zweiten Funkstation zur Bestimmung der für die Zufallszugriffsnachricht zu verwendenden Sendeleistung. Die Teilnehmerstation kann somit der Signalisierungsnachricht im erstgenannten Fall entnehmen, dass eine Zufallszugriffsnachricht nicht an diese Funkstation zu versenden ist, und zusätzlich Informationen in Bezug auf ein Signal der ersten Funkstation, an welche sie eine Zufallszugriffsnachricht versenden kann.

Die erfindungsgemäße Funkstation weist Mittel auf zum Versenden einer Signalisierungsnachricht mit Informationen betreffend ein Signal einer anderen Funkstation, welche sich an einem anderen Standort befindet, wobei das Signal der Vorbereitung einer von einer Teilnehmerstation zu versendenden Zufallszugriffsnachricht an die andere Funkstation dient.

Die erfindungsgemäße Teilnehmerstation weist Mittel auf zum Empfangen einer Signalisierungsnachricht von einer zweiten Funkstation mit Informationen betreffend ein Signal einer ersten Funkstation, welche sich an einem anderen Standort befindet als die zweite Funkstation, wobei das Signal der Vorbereitung der Versendung einer Zufallszugriffsnachricht an die erste Funkstation dient, sowie Mittel zum Versenden einer Zufallszugriffsnachricht an die erste Funkstation aufgrund der Verarbeitung der empfangenen Signalisierungsnachricht.

Die erfindungsgemäße Funkstation und die erfindungsgemäße Teilnehmerstation eignen sich insbesondere zur Durchführung des erfindungsgemäßen Verfahrens, wobei dies auch auf die Ausgestaltungen und Weiterbildungen zutrifft. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem,
- Figur 2:: ein Ablaufschema des erfindungsgemäßen Verfahrens.

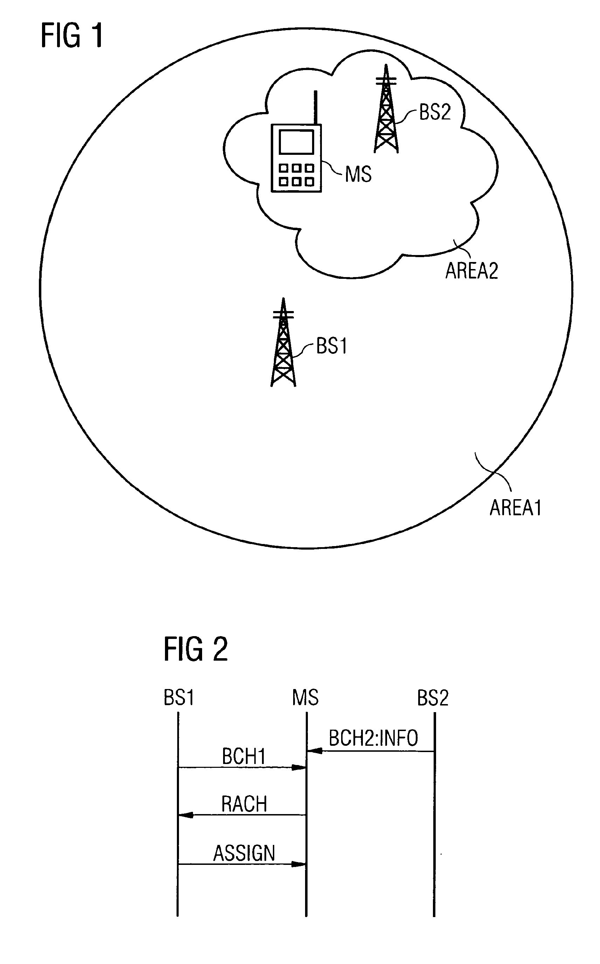

Figur 1 zeigt einen Ausschnitt aus einem Mobilfunkkommunikationssystem gemäß dem Standard UMTS, umfassend eine erste Basisstation BS1 mit einem als Kreis dargestellten Funkabdeckungsbereich bzw. einer Funkzelle AREA1 und eine zweite Basisstation BS2 an einem anderen Standort mit einem Funkabdeckungsbereich AREA2. Die beiden Funkabdeckungsbereiche AREA1 und AREA2 überlappen, wobei sich in dem Überlappungsbereich eine Mobilstation MS befindet. In Figur 1 ist der Funkabdeckungsbereich AREA2 vollständig in der Funkzelle AREA1 enthalten, es ist jedoch auch möglich, dass der Funkabdeckungsbereich AREA2 teilweise oder vollständig außerhalb der Funkzelle AREA1 liegt. Gemäß der FDD-Betriebsweise des Systems stehen der ersten Basisstation BS1 zwei Frequenzbänder zur Verfügung, auf welchen sie mit Mobilstationen kommunizieren kann. Eines dieser beiden Frequenzbänder wird zur Versendung von Nachrichten von der Basisstation BS1 an Mobilstationen, d.h. in Abwärtsrichtung (englisch: Downlink), verwendet, während das ändere Frequenzband zur Versendung von Nachrichten von Mobilstationen an die Basisstation BS1, d.h. in Aufwärtsrichtung (englisch: Uplink), verwendet wird. Der zweiten Basisstation BS2 hingegen steht lediglich ein Frequenzband zur Verfügung, welches ausschließlich zur Nachrichtenversendung in Abwärtsrichtung eingesetzt wird.

Die beiden Frequenzbänder der Basisstation BS1 werden als "Core-Bänder" und das Frequenzband der Basisstation BS2 als "Extension-Band" bezeichnet. Im Frequenzbereich kann das Extension-Band über, unter oder auch zwischen den Core-Bändern liegen. Der Vorteil bei der Verwendung eines Extension-Bandes ist, dass einem asymmetrischen Verkehrsaufkommen Rechnung getragen werden kann, bei welchem eine größere Nachrichtenmenge in Abwärtsrichtung zu übertragen ist als in Aufwärtsrichtung. Unterscheidet sich - wie in Figur 1 dargestellt - der Standort der Basisstation BS2, welche auf dem Extension-Band ausstrahlt, von dem Standort der Basisstation BS1, welche auf den Core-Bändern ausstrahlt bzw. empfängt, so kann der Funkabdeckungsbereich AREA2 der Basisstation BS2 einen so genannten "Hot Spot" darstellen, d.h. einen Bereich, in welchem in Abwärtsrichtung erhöhte Datenraten im Vergleich zum restlichen Bereich der Zelle AREA1 möglich sind. Die Mobilstation MS kann im Funkabdeckungsbereich AREA2 der Basisstation BS2 entweder ausschließlich von der Basisstation BS2 auf dem Extension-Band Nachrichten empfangen, oder zusätzlich oder alternativ mit der Basisstation BS1 auf den Core-Bändern kommunizieren.

Wünscht eine Mobilstation die Zuweisung von Funkressourcen für die Versendung oder den Empfang von Nachrichten, so muss sie sich hierfür bei einer Basisstation anmelden bzw. den Wusch nach Funkressourcen signalisieren. Dies erfolgt über die Versendung einer Zufallszugriffsnachricht gemäß einem an sich bekannten Zufallszugriffsverfahren auf dem PRACH-Kanal (PRACH: Physical Random Access Channel). Gemäß der UMTS Terminologie betrifft dies Mobilstationen, welche sich in einem der Zustände "idle mode", "CELL_FACH", "CELL_PCH" oder "URA_PCH" befinden. Bevor eine Mobilstation eine Zufallszugriffsnachricht versendet, synchronisiert sie sich zuerst mit der jeweiligen Basisstation, an welche die Zufallszugriffsnachricht versendet werden soll. Hierzu scannt die Mobilstation unter Kenntnis der Codes der gesuchten Kanäle die Funkfrequenzen, um die entsprechenden Synchronisationskanäle (Primary und Secondary Synchronisation Channel) der Basisstation aufzufinden und deren Inhalte auszuwerten. Im Anschluss entnimmt die Mobilstation einem anderen Signalisierungskanal-Kanal (CPICH, Common Pilot Channel) den in der Zelle verwendeten Scrambling Code. Ist dieser bekannt, kann die Mobilstation einen weiteren Signalisierungskanal (PCCPCH, Primary Common Control Physical Channel) auslesen, welcher mit dem Scrambling Code der Zelle codiert wird und welcher den Inhalt des Broadcast-Kanals (BCH, Broadcast Channel, hierbei handelt es sich um einen Transportkanal) trägt. Diesem entnimmt die Mobilstation u.a. Identifikationsinformationen der Zelle (Cell ID) und Informationen über die für die Zufallszugriffsnachricht verwendbaren Codes. Die beschriebenen, für die Vorbereitung eines Zufallszugriffs von einer Mobilstation verwendeten Kanäle werden auf der gleichen Funkfrequenz ausgestrahlt.

Vor der Versendung einer Zufallszugriffsnachricht bestimmt eine Mobilstation die von ihr für die Zufallszugriffsnachricht zu verwendende Sendeleistung. Dies erfolgt über eine offene Schleife zur Leistungsregelung (Open Loop Power Control), wobei die Mobilstation die von ihr empfangene Leistung des CPICH der jeweiligen Basisstation misst. Weiterhin entnimmt sie dem Broadcast-Kanal die von der jeweiligen Basisstation für den CPICH verwendete Sendeleistung. Aus diesen beiden Größen kann die Abschwächung eines Signals auf dem Weg zwischen der Basisstation und der Mobilstation berechnet und dementsprechend die anfängliche Sendeleistung der Mobilstation für die Zufallszugriffsnachricht eingestellt werden.

Der beschriebene Mechanismus zur Leistungsregelung für die Zufallszugriffsnachricht fußt auf der Annahme, dass der Pfadverlust (path loss) eines Signals zwischen Basisstation und Mobilstation für die Aufwärtsrichtung und die Abwärtsrichtung in etwa der gleiche ist. Dies trifft dann zu, wenn eine Mobilstation den CPICH der Basisstation BS1 vermisst und im Anschluss daran die Zufallszugriffsnachricht an die gleiche Basisstation BS1 versendet. Soll der CPICH einer ersten Basisstation vermessen werden und die Zufallszugriffsnachricht an eine zweite Basisstation gesendet werden, trifft obige Annahme zu, wenn sich die beiden Basisstationen in etwa am gleichen Standort befinden. Liegt jedoch die in Figur 1 dargestellte Konstellation vor, so unterscheidet sich der Pfadverlust des Abwärtskanals der Mobilstation BS2 und derjenige des Aufwärtskanals der Basisstation BS1 in der Regel voneinander. In Bezug auf die Nachrichtenversendung auf dem Extension-Band erfolgt die Versendung der Zufallszugriffsnachricht zur Bewerbung um Funkressourcen des Extension-Bandes nicht auf dem Extension-Band, sondern auf dem für die Aufwärtsrichtung verwendeten Core-Band. Befindet sich somit die Mobilstation MS im Funkabdeckungsbereich AREA2 der Basisstation BS2, so kann sie nicht den CPICH und den Broadcast-Kanal der Basisstation BS2 zur Bestimmung der Sendeleistung für eine Zufallszugriffsnachricht an die Basisstation BS1 verwenden. Gemäß der in Figur 1 dargestellten Konstellation ist z.B. davon auszugehen, dass eine anhand der Kanäle der Basisstation BS2 bestimmte Sendeleistung für die Versendung einer Zufallszugriffsnachricht an die Basisstation BS1 zu niedrig wäre, da sich die Mobilstation MS deutlich näher an der Basisstation BS2 als an der Basisstation BS1 befindet.

Im folgenden wird der Fall betrachtet, dass die Mobilstation MS, welche Funkressourcen in Abwärtsrichtung benötigt, beim Durchscannen der Funkfrequenzen auf die Kanäle der Basisstation BS2 stößt. Da die Versendung einer Zufallszugriffsnachricht auf dem Extension-Band nicht möglich ist, sollte der Broadcast-Kanal der Basisstation BS2 die Mobilstation MS auf diese Tatsache hinweisen. Daher müsste die Mobilstation MS weiterhin die Funkfrequenzen scannen, um die entsprechenden Kanäle der Basisstation BS1 zu finden und auslesen zu können, und die Bestimmung der Sendeleistung für die Zufallszugriffsnachricht vornehmen.

Um der Mobilstation MS die Versendung der Zufallszugriffsnachricht an die Basisstation BS1 zu erleichtern bzw. eine frühzeitigere Versendung und somit eine raschere Vergabe von Funkressourcen an die Mobilstation MS zu ermöglichen, enthalten die Signale des Broadcast-Kanals der Basisstation BS2 erfindungsgemäß eine oder mehrere der im folgenden beschriebenen Informationen. Die raschere Versendung einer Zufallszugriffsnachricht ist insbesondere vorteilhaft in Bezug auf Mobilstationen in den Zuständen CELL_FACH oder CELL_PCH, da in diesen Zuständen meist aktuell ein Dienst genutzt wird, für welchen eine größere Zeitverzögerung schädlich wäre.

### 1. Identifikationsinformation der Basisstation BS1 bzw. der Zelle der Basisstation BS1

Dies ist insbesondere dann vorteilhaft, wenn die Mobilstation MS neben dem Broadcast-Kanal der Basisstation BS2 die Broadcast-Kanäle mehrerer Basisstationen empfängt. In diesem Fall ist es möglich, dass die Basisstation BS2 bzw. das Extension-Band der Basisstation BS2 einer bestimmten anderen Basisstation zugeordnet ist, so dass die Versendung einer Zufallszugriffsnachricht an diese zugeordnete Basisstation für die Zuweisung von Ressourcen des Extension-Bandes notwendig ist. Würde die Mobilstation MS eine Zufallszugriffsnachricht an eine andere als diese zugeordnete Basisstation senden, so könnte sie zwar mit dieser kommunizieren, nicht jedoch die erhöhte Datenrate in Abwärtsrichtung des Extension-Bandes der Basisstation BS2 nutzen.

Die Identifikationsinformation der Basisstation BS1 bzw. ihrer Zelle sind auch in den Broadcast-Signalen der Basisstation BS1 enthalten, so dass die Mobilstation MS aufgrund der Informationen des Broadcast-Kanals der Basisstation BS2 dann, wenn sie den Broadcast-Kanal der Basisstation BS1 ausliest, erkennen kann, dass eine Zufallszugriffsnachricht an diese zu versenden ist, um eine Zuweisung von Funkressourcen des Extension-Bandes zu ermöglichen. Somit wird der Mobilstation MS die Auswahl der zu der Basisstation BS2 assoziierten Basisstation BS1 zur Versendung einer Zufallszugriffsnachricht ermöglicht.

Besonders vorteilhaft ist es, wenn für den Funkabdeckungsbereich AREA2 der Basisstation BS2 die gleichen Identifikationsinformationen verwendet werden wie für die Zelle AREA1 der Basisstation BS1. In diesem Fall muss der Inhalt des Broadcast-Kanals der Basisstation BS2 zur Mitteilung der Identifikationsinformationen des Zelle AREA1 nicht erweitert werden, da dieser ohnehin Identifikationsinformationen der Basisstation BS2 bzw. ihres Funkabdeckungsbereiches AREA2 enthält.

### 2. Frequenzlage der Core-Bänder der Basisstation BS1

Existiert ein vorgegebener Abstand zwischen dem Aufwärtsrichtungs-Core-Band und dem Abwärtsrichtung-Core-Band, so reicht es aus, wenn lediglich eine der beiden Frequenzlagen in dem Broadcast-Kanal der Basisstation BS2 angegeben wird. Dieser Information kann die Mobilstation MS dann entnehmen, auf welcher Frequenz sie den Broadcast-Kanal und die für das Auslesen des Broadcast-Inhalts nötigen Kanäle der Basisstation BS1 empfangen kann, sowie auf welcher Frequenz eine Zufallszugriffsnachricht an die Basisstation BS1 zu versenden ist. Durch die Angabe der Frequenzlage der Core-Bänder der Basisstation BS1 entfällt der Aufwand der Mobilstation MS zum Durchscannen des Frequenzraumes auf der Suche nach den jeweiligen Kanälen der Basisstation BS1. Die Mobilstation MS kann somit nach dem Auslesen des Broadcast-Kanal der Basisstation BS2 direkt die angegebene Frequenz des Abwärtsrichtungs-Core-Bands abhören, um die für den Zufallszugriff relevanten Informationen zu erlangen.

### 3. Angabe des Scrambling Codes der Basisstation BS1

Diese Information erlaubt es der Mobilstation MS, auf das Standardverfahren zur Ermittlung des Scrambling Codes der Basisstation BS1 zu verzichten. Hierdurch kann der Broadcast-Kanal der Basisstation BS1, welcher mit dem angegebenen Scrambling Code codiert ist, schneller ausgelesen werden.

### 4. Informationen zur Bestimmung der Sendeleistung für die Zufallszugriffsnachricht

Die Basisstation BS2 kann der Mobilstation MS die von der Basisstation BS1 für ihren CPICH verwendete Sendeleistung mitteilen. In diesem Fall muss die Mobilstation MS zur Berechnung der Sendeleistung für die Zufallszugriffsnachricht nicht den Inhalt des Broadcast-Kanals der Basisstation BS1 auslesen. Jedoch ist es zur Berechnung der Sendeleistung für den Zufallszugriff nötig, dass die Mobilstation MS die Empfangsleistung des CPICH der Basisstation BS1 misst. Dies wird dann beschleunigt, wenn der Broadcast-Kanal der Basisstation BS2 zusätzlich die Frequenzlage des Abwärtsrichtung-Core-Bandes enthält. In diesem Fall kann die Mobilstation nach dem Auslesen des Inhaltes des Broadcast-Kanals der Basisstation BS2 sofort, ohne das Frequenzband scannen und Kanäle der Basisstation BS1 auslesen zu müssen, die Messung der Empfangsleistung des CPICH der Basisstation BS1 durchführen und aufgrund der von der Basisstation BS2 übermittelten Sendeleistung des CPICH der Basisstation BS1 die Sendeleistung für die Zufallszugriffsnachricht bestimmen.

### 5. Informationen betreffend für eine Zufallszugriffsnachricht verwendbare Codes

Die Angabe von für eine Zufallszugriffsnachricht an die Basisstation BS1 verwendbaren Codes erfolgt in dem Broadcast-Kanal der Basisstation BS1. Entnimmt die Mobilstation MS diese Information dem Broadcast-Kanal der Basisstation BS2, so muss sie den Broadcast-Kanal der Basisstation BS1 in Hinblick auf diese Informationen nicht mehr auswerten.

Die beschriebenen Inhalte der Punkte 1 bis 5 sind an einer derartigen Position oder entsprechend einer derartigen Struktur in dem Inhalt des Broadcast-Kanals der Basisstation BS2 enthalten, dass die Mobilstation MS erkennt, dass diese Informationen sich auf die Versendung einer Zufallszugriffsnachricht bzw. der Vorbereitung dieser Versendung beziehen, indem sie den Broadcast-Kanal und/oder den CPICH einer anderen Basisstation betreffen.

Es ist möglich, dass der Broadcast-Kanal der Basisstation BS2 einen oder mehrere der oben beschriebenen Inhalte enthält, wobei der restliche Inhalt des Broadcast-Kanals der Basisstation BS2 unverändert bleiben kann. Da die Versendung von Zufallszugriffsnachrichten an die Basisstation BS2 nicht erlaubt ist, ist es jedoch auch möglich, dass diejenigen Inhalte des Broadcast-Kanals der Basisstation BS2, welche spezifisch der Versendung von Zufallszugriffsnachrichten an die Basisstation BS2 dienen, entfallen. Weiterhin ist es möglich, dass zumindest manche der für die Versendung von Zufallszugriffsnachrichten an die Basisstation BS1 benötigten Informationen ausschließlich in dem Broadcast-Kanal der Basisstation BS2 enthalten sind, und nicht in dem Broadcast-Kanal der Basisstation BS1.

Figur 2 zeigt in Form eines Ablaufschemas des erfindungsgemäßen Verfahrens die zwischen der Mobilstation MS und den Basisstationen BS1 und BS2 versendeten Nachrichten. Der Verlauf der Zeit ist hierbei nach unten aufgetragen. Zu Beginn empfängt die Mobilstation MS den Broadcast-Kanal BCH2 der Basisstation BS2, welcher u.a. die Informationen INFO enthält. Diese Informationen entsprechen einem oder mehreren der oben unter 1 bis 5 erläuterten Punkte. Im Anschluss wertet die Mobilstation MS den Broadcast-Kanal BCH1 der Basisstation BS1 aus, unter Berücksichtigung der bereits von der Basisstation BS2 empfangenen Informationen. Die Mobilstation bestimmt wie oben beschrieben die Sendeleistung für eine von ihr zu versendende Zufallszugriffsnachricht RACH an die Basisstation BS1. Nach einem gegebenenfalls vorhandenen, in Figur 2 nicht dargestellten Nachrichtenaustausch zwischen der Mobilstation MS und der Basisstation BS1 erfolgt durch die Basisstation BS1 eine Zuweisung von Funkressourcen der Core-Bänder und/oder des Extension-Bandes an die Mobilstation MS mittels der Nachricht ASSIGN.

Während die Erfindung anhand eines UMTS-Mobilfunkkommunikationssystems erläutert wurde, ist sie auch auf andere Funkkommunikationssysteme, in welchen Teilnehmerstationen Zufallszugriffsnachrichten versenden, anwendbar.

## Patentansprüche

1. Verfahren zur Kommunikation in einem Funkkommunikationssystem,
wobei das Funkkommunikationssystem eine erste Funkstation (BS1) an einem ersten Standort und eine zweite Funkstation (BS2) an einem zweiten von dem ersten verschiedenen Standort aufweist,
wobei die erste Funkstation (BS1) eine Zufallszugriffsnachricht (RACH) zur Anforderung von Funkressourcen von einer Teilnehmerstation (MS) empfängt,
wobei die zweite Funkstation (BS2) zuvor eine Signalisierungsnachricht (BCH2) mit Informationen (INFO) betreffend ein der Vorbereitung der Versendung der Zufallszugriffsnachricht (RACH) dienendes Signal (BCH1) der ersten Funkstation (BS1) versendet.

2. Verfahren nach Anspruch 1, bei dem
auf den Empfang der Zufallszugriffsnachricht (RACH) durch die erste Funkstation (BS1) hin eine Versendung einer teilnehmerstationsspezifischen Nachricht durch die zweite Funkstation (BS2) an die Teilnehmerstation (MS) erfolgt.

3. Verfahren nach Anspruch 1 oder 2, bei dem
die Informationen (INFO) die Frequenz der Ausstrahlung des Signals (BCH1) betreffen.

4. Verfahren nach einem der Ansprüche 1 bis 3, bei dem
die Informationen (INFO) Identifikationsinformationen der ersten Funkstation (BS1) oder ihrer Funkzelle, welche in dem Signal (BCH1) enthalten sind, betreffen.

5. Verfahren nach einem der Ansprüche 1 bis 4, bei dem
die Informationen (INFO) das Auslesen des Inhaltes des Signals (BCH1) ermöglichen.

6. Verfahren nach einem der Ansprüche 1 bis 5, bei dem
die Informationen (INFO) eine Sendeleistung der ersten Funkstation (BS1) betreffen.

7. Verfahren nach einem der Ansprüche 1 bis 6, bei dem
das Signal (BCH1) der Teilnehmerstation (MS) ermöglicht, eine für die Ausstrahlung der Zufallszugriffsnachricht (RACH) zu verwendende Leistung zu bestimmen.

8. Verfahren nach einem der Ansprüche 1 bis 7, bei dem
die Signalisierungsnächricht (BCH2) der Teilnehmerstation (MS) untersagt:
die Versendung einer Zufallszugriffsnachricht (RACH) an die zweite Funkstation (BS2), und/oder
die Verwendung von Empfangsleistungen von Signalen der zweiten Funkstation (BS2) zur Bestimmung der für die Ausstrahlung der Zufallszugriffsnachricht (RACH) zu verwendende Leistung.

9. Funkstation (BS2) für ein Funkkommunikationssystem, mit Mitteln zum Versenden einer Signalisierungsnachricht (BCH2) mit Informationen (INFO) betreffend ein Signal (BCH1) einer anderen Funkstation (BS1), welche sich an einem anderen Standort befindet,
wobei das Signal (BCH1) der Vorbereitung der Versendung einer von einer Teilnehmerstation (MS) zu versendenden Zufallszugriffsnachricht (RACH) an die andere Funkstation (BS1) dient.

10. Teilnehmerstation (MS) für ein Funkkommunikationssystem, mit
Mitteln zum Empfangen einer Signalisierungsnachricht (BCH2) von einer zweiten Funkstation (BS2) mit Informationen (INFO) betreffend ein Signal (BCH1) einer ersten Funkstation (BS1), welche sich an einem anderen Standort befindet als die zweite Funkstation (BS2), wobei das Signal (BCH1) der Vorbereitung der Versendung einer Zufallszugriffsnachricht (RACH) an die erste Funkstation (BS1) dient, und
Mitteln zum Versenden einer Zufallszugriffsnachricht (RACH) an die erste Funkstation (BS1) aufgrund der Verarbeitung der empfangenen Signalisierungsnachricht.
